# FASCICULE DE BREVET EUROPEEN

(11) **EP 4 466 137 B1**
(45) Date de publication et mention de la délivrance du brevet: **31.12.2025**
(21) Numéro de dépôt: 23703089.5
(22) Date de dépôt: 12.01.2023
(51) Int. Cl.: B29C 70/44, B29C 33/38, B28B 1/26, B28B 3/00, B28B 7/36, B28B 23/02

(54) **PROCEDE DE FABRICATION D'UNE PIECE EN MATERIAU COMPOSITE AVEC COMPACTAGE LIQUIDE**
VERFAHREN ZUR HERSTELLUNG EINES TEILS AUS VERBUNDSTOFF MIT FLÜSSIGKEITSVERDICHTUNG
METHOD FOR MANUFACTURING A PART MADE OF COMPOSITE MATERIAL WITH LIQUID COMPACTING

(30) Priorité: 17.01.2022 FR 2200348
(43) Date de publication de la demande: 27.11.2024
(73) Titulaire: Safran Ceramics, 33185 Le Haillan (FR)
(72) Inventeur: MECUSON, Gautier, 77550 MOISSY-CRAMAYEL (FR); CARMINATI, Paul, 77550 MOISSY-CRAMAYEL (FR); SCHWARTZ, Matthieu, 77550 MOISSY-CRAMAYEL (FR); LARDET, Théophile, 77550 MOISSY-CRAMAYEL (FR); DESJOYEAUX, Bertrand, Léon, Marie, 77550 MOISSY-CRAMAYEL (FR)
(74) Mandataire: Cabinet Beau de Loménie
(86) Numéro de dépôt international: PCT/FR2023/050041
(87) Numéro de publication internationale: WO 2023/135391

(56) Documents cités:
- WO-A1-2014/204672
- US-A1- 2017 334 791

## Description

### Domaine Technique

La présente invention se rapporte au domaine général de la fabrication des pièces en matériau composite, notamment à matrice céramique (CMC) ou organique (CMO).

### Technique antérieure

Les pièces en matériau composite à matrice céramique ou organique sont généralement fabriquées par imprégnation d'une préforme fibreuse. La préforme fibreuse peut être disposée dans un moule, fermé par un contre-moule. La préforme fibreuse est ensuite imprégnée avec une barbotine chargée de particules d'un précurseur de matrice ou avec une résine, selon le type de matrice souhaité. L'imprégnation est réalisée en injectant la barbotine ou la résine dans la cavité de moulage qui contient la préforme fibreuse, de sorte à faire pénétrer progressivement la barbotine ou la résine dans la préforme fibreuse.

Les solutions d'imprégnation utilisant un moule et un contre-moule sont toutefois peu satisfaisantes pour la fabrication de pièces de grandes dimensions mais de faible épaisseur, comme par exemple les pièces d'arrière-corps aéronautiques. En effet, les tolérances dimensionnelles que doivent respecter le moule et le contre-moule sont extrêmement restreintes, ce qui complique fortement la fabrication d'un moule et d'un contre-moule adaptés à de telles pièces.

Ainsi, pour fabriquer des pièces de grande taille mais de faible épaisseur, il est possible d'utiliser une membrane déformable à la place du contre-moule. On s'affranchit par conséquent des problématiques de tolérancement des outillages. Une telle solution est par exemple décrite dans le document US2017334791A1, qui décrit un procédé de moulage par injection (RTM). Dans ce document, la barbotine est injectée dans la chambre d'imprégnation dans laquelle est disposée la préforme fibreuse, puis une pression est exercée sur la membrane souple afin de faire pénétrer la barbotine au travers de la préforme fibreuse. Toutefois, cette méthode ne permet pas un contrôle satisfaisant du taux volumique de fibres.

Pour remédier à cet inconvénient, le document US2021046671A1 décrit un procédé dans lequel une membrane sépare une chambre d'imprégnation, dans laquelle la préforme fibreuse est disposée, d'une chambre de compaction. Dans cette solution, on applique d'abord une pression sur la membrane en injectant un fluide de compression dans la chambre de compaction, avant d'injecter la barbotine. Pendant l'injection de la barbotine, on poursuit l'injection du fluide de compression de sorte à maintenir la pression de compactage sur la préforme fibreuse.

Toutefois, dans le cas où la pièce à infiltrer selon ce procédé est disposée de sorte à présenter une surface étendue selon une direction inclinée ou verticale, ou lorsque la pièce présente des dimensions telles qu'elle s'étend sur une hauteur significative dans la chambre d'imprégnation, des variations non désirées du taux volumique de fibres dans la hauteur de la pièce fabriquée, voire des variations d'épaisseur non souhaitées, peuvent apparaître. On constate alors que la pression de compactage appliquée sur la préforme par la membrane, résultant de la différence de pression entre le fluide de compression et le fluide d'imprégnation, n'est pas identique sur toute la hauteur de la membrane.

En outre, les procédés existants ne permettent pas l'application d'une pression très faible sur la préforme, nécessitant ainsi une maîtrise permanente et précise de la différence de pression entre le fluide d'imprégnation et le fluide de compression. En particulier, dans le cas où le fluide d'imprégnation est une barbotine, la pression de compactage appliquée sur la préforme fibreuse est trop élevée et difficilement pilotable, du fait des variations importantes de pression dans la chambre d'imprégnation.

### Exposé de l'invention

La présente invention a donc pour but de remédier aux inconvénients précités en proposant une solution de fabrication d'une pièce en matériau composite à renfort fibreux.

Ainsi, l'invention propose un procédé de fabrication d'une pièce en matériau composite comprenant les étapes suivantes :
- disposition d'une préforme fibreuse dans un moule comprenant une chambre d'imprégnation étant en contact avec une première face de la préforme sur une surface de support de la chambre d'imprégnation, la chambre d'imprégnation étant fermée par une membrane souple placée en regard d'une deuxième face de la préforme opposée à la première face, ladite membrane séparant la chambre d'imprégnation d'une chambre de compaction,
- injection d'un fluide de compression dans la chambre de compaction et injection d'un fluide d'imprégnation comprenant un précurseur de matrice dans la chambre d'imprégnation,
- traitement de solidification du précurseur de matrice au sein de la préforme fibreuse de sorte à obtenir une pièce en matériau composite comprenant un renfort fibreux lié par une matrice solide,
le procédé étant caractérisé en ce le fluide de compression est un liquide dont la valeur de la masse volumique correspond à entre 60% et 125% de la valeur de la masse volumique du fluide d'imprégnation.

De préférence, le fluide de compression est un liquide dont la valeur de la masse volumique correspond à entre 90% et 110% de la valeur de la masse volumique du fluide d'imprégnation.

Ainsi, en utilisant un fluide de compression ayant une masse volumique proche de celle du fluide d'imprégnation, on obtient un taux de compactage sensiblement constant sur toute la hauteur de la membrane. En effet, la différence de pression entre deux points du liquide d'imprégnation situés à des altitudes différentes Z₁ et Z₂ sera sensiblement identique à la différence de pression entre deux points du liquide de compression situés aux mêmes altitudes Z₁ et Z₂, car ces différences de pression sont directement proportionnelles à la masse volumique du fluide. Par conséquent, la différence de pression fluide due à l'altitude évoluera de manière sensiblement identique de part et d'autre de la membrane, ce qui permet de maîtriser des différences de pression très faibles entre le fluide de compression et le fluide d'imprégnation.

En outre, en utilisant un liquide comme fluide de compression, on obtient un fluide de compression quasi-incompressible, ce qui permet de maîtriser facilement la pression différentielle entre le fluide de compression et le fluide d'imprégnation, que ce soit durant l'étape de remplissage de la chambre de compaction ou durant l'infiltration dans la préforme. Ainsi, on peut par ailleurs obtenir une différence de pression réduite voire nulle de part et d'autre de la membrane.

Le fluide d'imprégnation peut être une barbotine comprenant des particules de précurseur de matrice ou une résine.

Selon une caractéristique particulière de l'invention, la préforme fibreuse disposée dans le moule s'étend sur une hauteur supérieure ou égale à 300 mm selon la direction de l'accélération de pesanteur.

Selon une autre caractéristique particulière de l'invention, la différence entre la pression exercée par le fluide d'imprégnation sur la membrane et la pression exercée par le fluide de compression sur la membrane est inférieure à 0,5 bar.

De préférence, la différence entre la pression exercée par le fluide d'imprégnation sur la membrane et la pression exercée par le fluide de compression sur la membrane est inférieure à 0,3 bar.

De préférence, la différence entre la pression exercée par le fluide d'imprégnation sur la membrane et la pression exercée par le fluide de compression sur la membrane est inférieure à 0,1 bar.

Selon une autre caractéristique particulière de l'invention, l'injection du fluide de compression est réalisée au moins en partie pendant le remplissage de la chambre d'imprégnation par le fluide d'imprégnation. En particulier, l'injection du fluide de compression est réalisée au moins en partie pendant le remplissage de la chambre d'imprégnation par le fluide d'imprégnation de sorte que la différence de hauteur de remplissage entre le fluide de compression et le fluide d'imprégnation mesurée au niveau de la membrane selon la direction de l'accélération de pesanteur soit positive ou nulle, et inférieure à 500 mm, et de préférence inférieure à 300 mm, et de sorte que la différence de pression entre le fluide de compression et le fluide d'imprégnation de part et d'autre de la membrane soit inférieure à 0,3 bar, et de préférence inférieure à 0,1 bar.

Une « différence de hauteur de remplissage entre le fluide de compression et le fluide d'imprégnation mesurée au niveau de la membrane selon la direction de l'accélération de pesanteur » positive ou nulle signifie que la hauteur de remplissage du fluide de compression mesurée au niveau de la membrane est supérieure ou égale à la hauteur de remplissage du fluide d'imprégnation mesurée au niveau de la membrane selon la direction de l'accélération de pesanteur.

Ainsi, en remplissant la chambre d'imprégnation et la chambre de compaction à la même vitesse, on facilite l'application et le maintien d'une pression différentielle faible sur la membrane.

Selon une autre caractéristique particulière de l'invention, on augmente la pression exercée sur la membrane par le fluide de compression après le remplissage de la chambre d'imprégnation.

Ainsi, il est plus facile d'appliquer une faible pression de compactage sur la préforme fibreuse, ou de maintenir la membrane en place si la pression exercée par le fluide d'imprégnation sur la membrane augmente. Par conséquent, selon une autre caractéristique particulière de l'invention, l'augmentation de la pression exercée sur la membrane par le fluide de compression après le remplissage de la chambre d'imprégnation est réalisée tandis que la pression exercée par le fluide d'imprégnation sur la membrane augmente.

Selon une autre caractéristique particulière de l'invention, l'augmentation de la pression exercée sur la membrane par le fluide de compression est réalisée en augmentant la hauteur de remplissage du fluide de compression. En particulier, l'augmentation de la pression exercée sur la membrane par le fluide de compression est réalisée en augmentant la hauteur de remplissage du fluide de compression de sorte que la différence de hauteur de remplissage entre le fluide de compression et le fluide d'imprégnation selon la direction de l'accélération de pesanteur soit supérieure à 50 mm.

Selon une autre caractéristique particulière de l'invention, le fluide d'imprégnation et le fluide de compression ont la même composition.

Selon une autre caractéristique particulière de l'invention, le fluide d'imprégnation est une suspension comprenant une pluralité de particules de précurseur de matrice, la surface de support de la chambre d'imprégnation du moule comprenant un filtre configuré pour retenir les particules de la suspension dans la chambre d'imprégnation.

Selon une autre caractéristique particulière de l'invention, au moins une partie du fluide de compression introduit dans la chambre de compaction est ensuite introduite dans la chambre d'imprégnation par un réseau en série.

Au moins une partie du fluide de compression peut être ensuite utilisée comme fluide d'imprégnation, sous réserve que ladite partie du fluide de compression comprenne un ou des précurseurs de matrice. Cette circulation du fluide de compression dans la chambre de compaction puis dans la chambre d'imprégnation peut être réalisée par un réseau en série.

Selon une autre caractéristique particulière de l'invention, un dispositif permanent de contrôle de pression est présent dans ledit réseau en série reliant la chambre de compaction à la chambre d'imprégnation.

Ainsi, selon une caractéristique particulière de l'invention, l'introduction d'une partie du fluide de compression dans la chambre d'imprégnation est réalisée par un réseau en série reliant la chambre de compaction et la chambre d'imprégnation, ledit réseau comprenant un dispositif permanent de contrôle de pression.

Ce mode particulier permet de dissocier la gestion du différentiel de pression entre la chambre de compaction et la chambre d'imprégnation du pilotage de la circulation du ou des fluides et de leur pression statique. Le dispositif permanent de contrôle de pression peut être un dispositif permanent de réduction de pression.

Selon une autre caractéristique particulière de l'invention, le fluide de compression présente une compressibilité isotherme inférieure à 10⁻⁹ Pa⁻¹ et les parois de la chambre de compaction sont indéformables à l'exception de la membrane, l'augmentation de la pression exercée sur la membrane par le fluide de compression étant réalisée en fermant la chambre de compaction de sorte qu'elle soit remplie par le fluide de compression.

Ainsi, le fluide de compression quasi-incompressible applique sur la membrane une pression supérieure à celle appliquée par le fluide d'imprégnation, même lorsque que la pression du fluide d'imprégnation est augmentée. L'eau est un exemple de fluide de compression présentant une compressibilité isotherme inférieure à 10⁻⁹ Pa⁻¹. En outre, certaines huiles dont la compressibilité isotherme est inférieure à 10⁻⁹ Pa⁻¹ peuvent également être utilisées comme fluide de compression.

Selon une autre caractéristique particulière de l'invention, le fluide de compression présente une compressibilité isotherme inférieure à 10⁻⁹ Pa⁻¹ et les parois de la chambre de compaction sont indéformables à l'exception de la membrane, et le fluide d'imprégnation est injecté dans la chambre d'imprégnation une fois que la chambre de compaction est remplie par le fluide de compression et fermée.

Selon une autre caractéristique particulière de l'invention, le moule comprend un dispositif d'ajustement du volume de la chambre de compaction comportant au moins un élément mobile.

Cet élément mobile peut être un piston ou une vis. Un tel dispositif d'ajustement du volume peut être configuré pour compenser une variation du volume de la chambre de compaction engendrée par la déformation des parois de ladite chambre de compaction et par la déformation de la membrane souple sous l'effet de la pression lors du procédé, de sorte à maintenir un volume de la chambre de compaction constant pendant le procédé.

### Brève description des dessins

[Fig. 1] La figure 1 est une vue en coupe d'une portion d'un premier moule de fabrication lorsque le liquide de compression commence à être injecté.
[Fig. 2] La figure 2 est une vue en coupe d'une portion du moule de la figure 1 lorsque le liquide de compression et le fluide d'imprégnation sont injectés simultanément.
[Fig. 3] La figure 3 est une vue en coupe d'une portion du moule des figures 1 et 2 lorsque le fluide d'imprégnation remplit la chambre d'imprégnation.
[Fig. 4] La figure 4 est une vue en coupe d'une portion du moule des figures 1, 2 et 3 lorsque le niveau de remplissage de la chambre de compaction est supérieur au niveau de remplissage de la chambre d'imprégnation.
[Fig. 5] La figure 5 est une vue en coupe d'une portion d'un moule de fabrication pour l'injection d'une barbotine.
[Fig. 6] La figure 6 est une vue en coupe d'une portion d'un deuxième moule de fabrication lorsque le liquide de compression commence à être injecté.
[Fig. 7] La figure 7 est une vue en coupe d'une portion du moule de la figure 6 lorsque les chambres d'imprégnation et de compaction sont remplies.
[Fig. 8] La figure 8 est une vue en coupe d'une portion du moule des figures 6 et 7 lorsque la chambre de compaction est remplie et fermée.
[Fig. 9] La figure 9 est une vue en coupe d'une portion de moule comprenant un dispositif d'ajustement du volume de la chambre d'imprégnation.

### Description des modes de réalisation

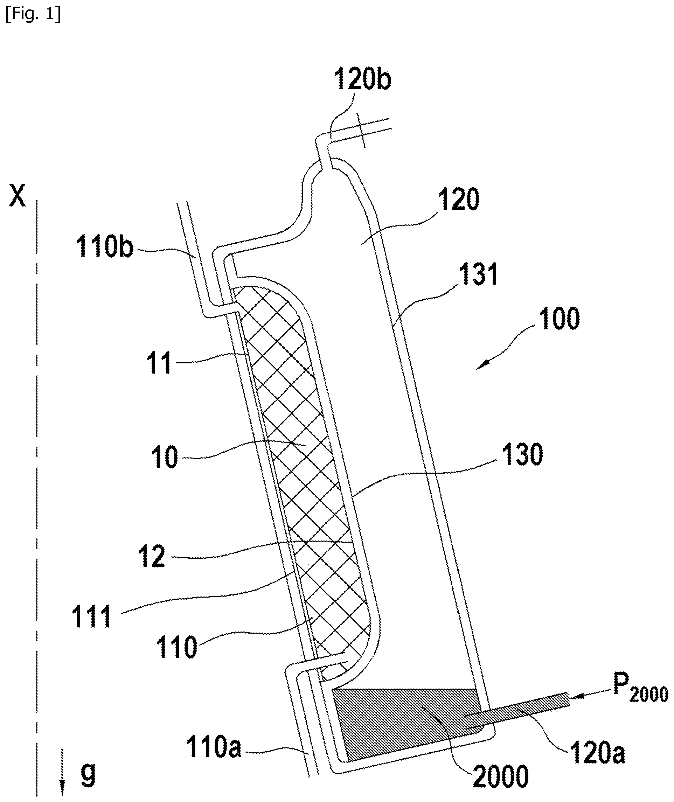

Comme représenté sur les figures 1 à 4, un système de fabrication d'une pièce en matériau composite selon un premier mode de réalisation comprend un moule 100 qui comporte d'une part une chambre d'imprégnation 110 dans laquelle est disposée une préforme fibreuse 10 et dans laquelle un fluide d'imprégnation 1000 est injecté, et d'autre part une chambre de compaction 120 dans laquelle un liquide de compression 2000 est injecté.

La chambre d'imprégnation 110 et la chambre de compaction 120 du moule 100 sont séparées par une membrane souple 130. La membrane 130 permet d'appliquer une pression de compactage sur la préforme fibreuse 10 disposée dans la chambre d'imprégnation 110, la pression de compactage restant de préférence assez faible. Cette pression de compactage est produite par le liquide de compression 2000 qui, en appliquant une pression sur la membrane 130, déforme la membrane 130 contre la préforme fibreuse 10 et la maintient en place quand la pression augmente dans la chambre d'imprégnation 110.

La membrane 130 est par exemple en silicone. La membrane 230 doit être réalisée dans un matériau résistant aux températures auxquelles ladite membrane 230 peut être soumise lors du procédé, ainsi qu'aux fluides avec lesquels la membrane 230 va être en contact. La membrane 230 doit présenter une compressibilité cohérente avec la tolérance dimensionnelle recherchée pour la pièce. Par exemple, la membrane 230 peut présenter une épaisseur moyenne d'environ 5 mm et peut être réalisée dans un matériau de type caoutchouc, présentant un module d'Young d'environ 2000 MPa. Une telle membrane 230 s'amincira d'environ 1,5 µm sous une pression de 6 bars, garantissant une très bonne tolérance dimensionnelle.

L'invention s'applique particulièrement bien aux pièces ayant une faible épaisseur et une grande hauteur, par exemple des carters de turbomachine comme des carters de soufflante, des carters de compresseur et des carters d'échappement ou arrières corps. Typiquement, l'invention est particulièrement intéressante pour des pièces tronconiques d'épaisseur allant de 1 mm à 6 mm, de diamètre d'environ 1 m et de hauteur supérieure à 1 m. Ainsi, la préforme fibreuse est destinée à former le renfort fibreux d'une pièce en matériau composite présentant une taille importante dans chacune des trois dimensions. Lorsque la préforme fibreuse est disposée dans la chambre d'imprégnation, elle s'étend sur une distance significative en hauteur, de préférence supérieure ou égale à 300 mm.

La préforme fibreuse présente par exemple une géométrie complexe, fermée ou non. La préforme fibreuse peut présenter une géométrie de révolution avec une génératrice courbe ou rectiligne. La préforme fibreuse peut par exemple présenter une forme au moins partiellement cylindrique ou tronconique.

La préforme fibreuse est considérée ici comme la structure fibreuse de la pièce en composite, obtenue par toute technique ou combinaison de technique de constitution de textile, de disposition et de déformation pour l'appliquer dans un outillage.

La préforme peut être ainsi réalisée au moins en partie par empilements de strates ou plis obtenus par tissage bidimensionnel (2D). La préforme peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Par « tissage tridimensionnel », on entend ici un tissage par lequel des fils de chaine traversent plusieurs couches de fils de trame, ou des fils de trame traversent plusieurs couches de fils de chaine.

La préforme peut également être réalisée au moins en partie par des nappes de fibres unidirectionnelles (UD), qui peuvent être obtenues par dépose de rubans ou par placement automatique des fibres (AFP pour « Automated Fibre Placement »), ou par enroulement filamentaire.

La préforme peut être réalisée à partie de fibres constituées des matériaux suivants : l'alumine, la mullite, la silice, un aluminosilicate, un borosilicate, du carbure de silicium, du carbone, ou un mélange de plusieurs de ces matériaux. La préforme fibreuse peut être réalisée à partir de tout type de fibres de verre.

Dans l'exemple illustré sur les figures 1 à 4, la préforme fibreuse 10 est une pièce tronconique d'axe de révolution X. La préforme fibreuse 10 comprend ainsi une première face intérieure 11 tronconique et une deuxième face extérieure 12 tronconique également.

La chambre d'imprégnation 110 est délimitée par la membrane 130 et par au moins une surface 111 située en regard de la membrane 130. Lorsque la préforme fibreuse 10 est disposée dans la chambre d'imprégnation 110, la première face intérieure 11 de la préforme 10 repose sur la surface 111 de la chambre d'imprégnation 110 et la deuxième face extérieure 12 de la préforme 10 est placée en regard de la membrane 130. Par conséquent, la surface 111 de la chambre d'imprégnation 110 présente une géométrie adaptée à la première face intérieure 11 de la préforme 10. Dans l'exemple illustré sur les figures 1 à 4, la surface 111 de la chambre d'imprégnation 110 a donc une géométrie tronconique d'axe de révolution X identique à l'axe de révolution X de la préforme fibreuse 10.

Le moule 100 comprend au moins un orifice d'entrée 110a du fluide d'imprégnation 1000 et peut comprendre au moins un orifice de sortie 110b du fluide d'imprégnation 1000. De préférence, le ou les orifices d'entrée 110a sont situés à une extrémité de la surface 111 de la chambre d'imprégnation 110 et le ou les orifices de sortie 110b du fluide d'imprégnation 1000 sont situés à l'autre extrémité de la surface 111 de la chambre d'imprégnation 110. De préférence, les orifices d'entrée 110a et les orifices de sortie 110b sont répartis sur la longueur ou la circonférence de la préforme fibreuse 10.

Le système de fabrication comprend en outre un dispositif d'injection du fluide d'imprégnation 1000 configuré pour injecter ledit fluide d'imprégnation 1000 dans la chambre d'imprégnation 110 à une pression p₁₀₀₀.

La chambre de compaction est délimitée par la membrane 130 et par au moins une paroi 131 située en regard de la membrane 130. De préférence, la ou les parois 131 ne sont pas déformables, en particulier sous l'effet du liquide de compression 2000.

Le moule 100 comprend au moins un orifice d'entrée 120a du liquide de compression 2000 et peut comprendre au moins un orifice de sortie 120b du liquide de compression 2000. De préférence, le ou les orifices d'entrée 120a sont situés à une extrémité de la paroi 212 de la chambre de compaction 120 et le ou les éventuels orifices de sortie 120b du liquide de compression 2000 sont situés à l'autre extrémité de la paroi 212 de la chambre de compaction 120. De préférence, les orifices d'entrée 120a et les orifices de sortie 120b sont répartis sur la longueur ou la circonférence de la chambre de compaction 120.

Le moule 100 peut également comprendre des orifices de sortie de gaz, par exemple pour permettre la purge d'air dans la chambre de compaction 120. Ces orifices de sortie de gaz peuvent déboucher dans la partie haute de la chambre de compaction 120. Ces orifices de sortie de gaz peuvent être confondus au moins en partie avec les orifices de sortie 120b du liquide de compression 2000.

Le système de fabrication comprend en outre un dispositif d'injection du liquide de compression 2000 configuré pour injecter ledit liquide de compression 2000 dans la chambre de compaction 120 à une pression p₂₀₀₀.

Pour la fabrication d'une pièce en matériau composite à matrice céramique, le fluide d'imprégnation peut être une barbotine c'est-à-dire un liquide dans lequel sont dispersées et maintenues en suspension des particules de céramiques.

La phase liquide de la barbotine peut notamment être constituée par de l'eau, de l'éthanol, ou tout autre liquide dans lequel il est possible de mettre la poudre désirée en suspension.

Les particules de céramique de la barbotine peuvent être en alumine, en mullite, en silice, en zircone, en aluminosilicate ou en aluminophosphate, ou un mélange de ces composants. Les particules de céramique peuvent également être en carbure, par exemple en carbure de silicium, ou être des poudres de carbone, par exemple en graphite ou en noir de carbone.

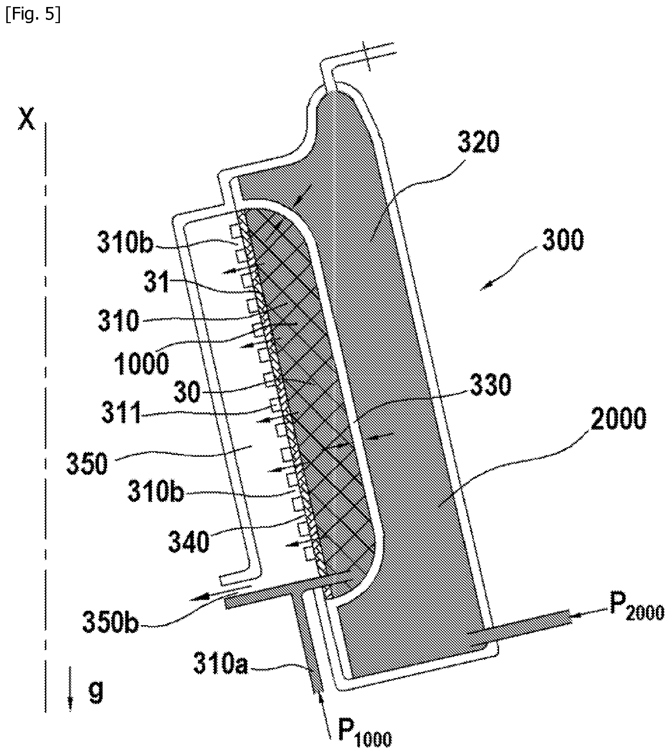

La figure 5 présente une variante pour la fabrication d'une pièce en matériau composite à matrice céramique par injection d'une barbotine comprenant des particules. Dans cette variante, le moule 300 comprend une chambre de compaction 320 similaire à celle décrite précédemment destinée à recevoir le liquide de compression 2000, ainsi qu'une chambre d'imprégnation 310 dans laquelle repose une préforme fibreuse 30 similaire à celle décrite précédemment. Le fluide d'imprégnation 1000, qui correspond ici à la barbotine, est introduit dans la chambre d'imprégnation par au moins un orifice d'entrée 310a. Le moule 300 comprend en outre un ou plusieurs orifices de sortie 310b permettant d'évacuer la phase liquide de la barbotine. Les orifices de sortie 310b sont disposés sur une surface 311 de la chambre d'imprégnation 310, située de préférence à l'opposé de la membrane 330.

Un filtre 340 est disposé dans la chambre d'imprégnation 310 du moule 300 entre une face 31 de la préforme 30 et la surface 311 de la chambre d'imprégnation 310 présentant le ou les orifices de sortie 310b. D'une part, le filtre 340 permet le passage de la phase liquide de la barbotine, qui a circulée à travers la préforme 30, afin que ladite phase liquide soit évacuée de la chambre d'imprégnation 310 par le ou les orifices de sortie 310b. D'autre part, le filtre 340 permet de retenir à l'intérieur de la chambre d'imprégnation 310 les particules présentes dans la barbotine.

Ainsi, la taille des porosités du filtre 340 est adaptée à la dimension des particules de la barbotine afin que lesdites particules de la barbotine ne traversent pas ledit filtre 340 et soient retenues dans la chambre d'imprégnation 310.

Dans la variante illustrée sur la figure 5, le moule 300 comprend en outre un dispositif de collecte 350 permettant de collecter la phase liquide de la barbotine, pour l'évacuer par un canal 350b. On ne sort bien entendu pas du cadre de l'invention si le moule ne comprend pas un tel dispositif de collecte.

Pour la fabrication d'une pièce en matériau composite à matrice céramique par injection d'une barbotine comprenant des particules, la valeur de la masse volumique du liquide de compression est comprise entre 60% et 125% de la valeur de la masse volumique de la barbotine. De préférence, la valeur de la masse volumique du liquide de compression est comprise entre 90% et 110% de la valeur de la masse volumique de la barbotine.

Pour la fabrication d'une pièce en matériau composite à matrice organique, le fluide d'imprégnation peut être une résine thermodurcissable ou thermoplastique. La valeur de la masse volumique du liquide de compression est alors comprise entre 60% et 125% de la valeur de la masse volumique de la résine. De préférence, la valeur de la masse volumique du liquide de compression est comprise entre 90% et 110% de la valeur de la masse volumique de la résine.

Pour la fabrication d'une pièce en matériau composite à matrice métallique, le fluide d'imprégnation peut être un métal liquide ou semi-solide. Le métal utilisé comme fluide d'imprégnation peut être un alliage d'aluminium, un alliage de titane ou un alliage de magnésium. Dans cette configuration, la membrane peut être réalisée en métal fin afin de résister aux températures du procédé tout en étant suffisamment souple.

De manière générale, le liquide de compression peut avoir une masse volumique très proche voire identique de celle du fluide d'imprégnation, et ainsi le liquide de compression peut avoir la même composition que le fluide d'imprégnation. En particulier, au moins une partie du liquide de compression introduit dans la chambre de compaction peut ensuite être introduite dans la chambre d'imprégnation en tant que fluide d'imprégnation par exemple par un réseau en série. Dans cette configuration, le ou les orifices de sortie 120b du liquide de compression 2000 sont reliées à le ou les orifices d'entrée 110a du liquide d'imprégnation 1000, par exemple par un réseau en série.

Un dispositif permanent de gestion de la pression peut être présent dans le réseau reliant le ou les orifices de sortie 120b du liquide de compression 2000 à le ou les orifices d'entrée 110a du liquide d'imprégnation 1000. Il est ainsi possible de dissocier la gestion du différentiel de pression entre les fluides de la chambre de compaction et de la chambre d'imprégnation du pilotage de la circulation du ou des fluides et de leur pression statique.

Le procédé de fabrication de la pièce en matériau composite selon le premier mode de réalisation de l'invention comprend une étape de remplissage de la chambre d'imprégnation 110 illustrée sur les figures 1 à 3. Pendant cette étape, on injecte le fluide d'imprégnation 1000 dans la chambre d'imprégnation 110 par le ou les orifices d'entrée 110a à une pression d'injection p₁₀₀₀ et le liquide de compression 2000 dans la chambre de compaction 120 par le ou les orifices d'entrée 120a à une pression d'injection p₂₀₀₀.

De préférence, durant cette étape de remplissage de la chambre d'imprégnation 110 et lorsque les masses volumiques du fluide d'imprégnation 1000 et du liquide de compression 2000 sont quasi-identiques, l'injection du liquide de compression 2000 est réalisée de sorte que la différence de hauteur de remplissage dirigée selon la direction de pesanteur g entre le liquide de compression 2000 et le fluide d'imprégnation 1000 mesurée au niveau de la membrane 130 soit inférieure à 500 mm, de préférence inférieure à 300 mm et encore de préférence inférieure à 50 mm. De préférence, la hauteur de remplissage du liquide de compression 2000 mesurée au niveau de la membrane est supérieure ou égale à la hauteur de remplissage du fluide d'imprégnation 1000 durant toute l'étape de remplissage. Ainsi, la chambre d'imprégnation 110 et la chambre de compaction 120 sont remplies simultanément et à la même vitesse, de sorte que la hauteur de remplissage du fluide d'imprégnation 1000 mesurée au niveau de la membrane 130 soit sensiblement identique à la hauteur de remplissage du liquide de compression 2000 mesurée au niveau de la membrane 130.

De préférence, l'injection du liquide de compression 2000 est réalisée de sorte que la différence de hauteur de remplissage dirigée selon la direction de pesanteur g entre le liquide de compression 2000 et le fluide d'imprégnation 1000 mesurée au niveau de la membrane 130 génère une pression différentielle sur la membrane inférieure à 0,25 bar, préférentiellement inférieure à 0,15 bar et préférentiellement inférieure à 0,05 bar. Ainsi, les hauteurs de remplissage du liquide de compression 2000 et du fluide d'imprégnation 1000 peuvent être contrôlées et modifiées de sorte à corriger une légère différence de valeur entre la masse volumique du fluide d'imprégnation 1000 et le liquide de compression 2000, permettant ainsi d'obtenir la pression différentielle souhaitée sur la membrane.

On peut commencer par remplir uniquement la chambre de compaction 120, avec le liquide de compression 2000, jusqu'à arriver à hauteur de la membrane 130, comme illustré sur la figure 1. Puis, on commence à injecter le fluide d'imprégnation 1000 dans la chambre d'imprégnation 110 tout en poursuivant l'injection du liquide de compression 2000, en maintenant un écart de hauteur de remplissage entre le liquide de compression 2000 et le fluide d'imprégnation 1000 de sorte à ce que la pression hydrostatique appliquée par le fluide d'imprégnation 1000 sur la membrane 130 soit légèrement inférieure à la pression hydrostatique appliquée par le liquide de compression 2000 sur la membrane 130.

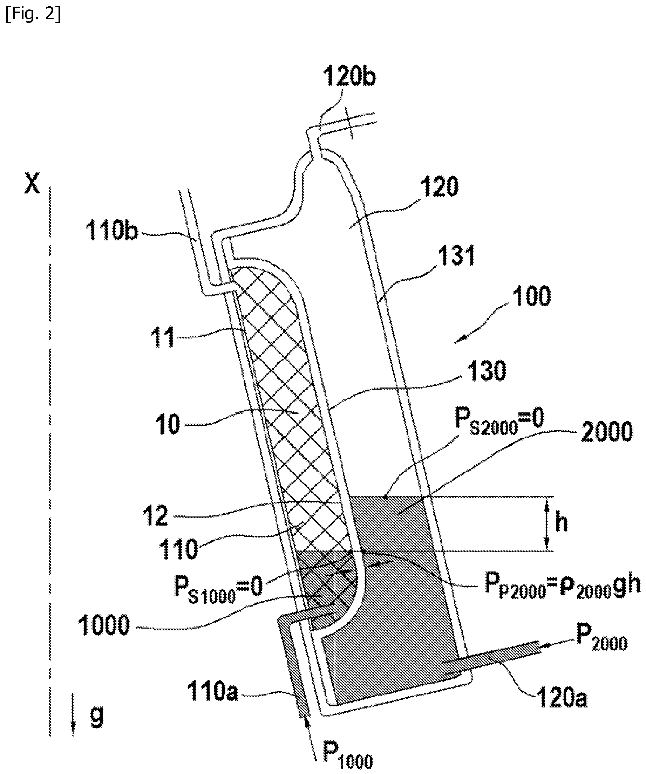

Ainsi, comme illustré sur la figure 2, on maintient une différence de hauteur de remplissage h entre le liquide de compression 2000 et le fluide d'imprégnation 1000 mesurée au niveau de la membrane 130 selon la direction de l'accélération de pesanteur g. Dans ce cas, la pression appliquée sur la préforme fibreuse sera inférieure ou égale à ρ₂₀₀₀gh. En effet, la pression pₛ₁₀₀₀ à la surface du fluide d'imprégnation 1000 et la pression pₛ₂₀₀₀ à la surface du liquide de compression 2000 sont nulles, tandis que la pression pₚ₂₀₀₀ du liquide de compression 2000 à la hauteur de la surface du fluide d'imprégnation 1000 correspondra à ρ₂₀₀₀gh. Par exemple, dans le cas d'une différence de hauteur de remplissage h = 50 mm et pour un liquide ayant une masse volumique de ρ₂₀₀₀ = 1000 kg.m⁻³, on applique une pression sur la préforme fibreuse 10 environ inférieure ou égale à 0,05 bars.

En utilisant un liquide de compression 2000 de masse volumique ρ₂₀₀₀ similaire à la masse volumique ρ₁₀₀₀ du fluide d'imprégnation 1000, la pression de compactage appliquée sur la membrane 130 est constante sur toute la hauteur de la membrane dans la direction Z orientée selon l'accélération de pesanteur g. En effet, la différence de pression due à l'altitude entre deux points P_{h1z1} et P_{h1z2} d'altitudes respectives z₁ et z₂ baignant dans le fluide de compression 1000 à l'intérieur de la chambre d'imprégnation 110 est ρ₁₀₀₀g(z₂-z₁). De même, la différence de pression due à l'altitude entre deux points P_{h2z1} et P_{h2z2} d'altitudes respectives z₁ et z₂ baignant dans le liquide de compression 2000 à l'intérieur de la chambre de compaction 120 est ρ₂₀₀₀g(z₂-z₁). Ainsi, comme les masses volumiques ρ₁₀₀₀ et ρ₂₀₀₀ sont sensiblement égales, les variations de pression dues à l'altitude seront sensiblement identiques de part et d'autre de la membrane 130.

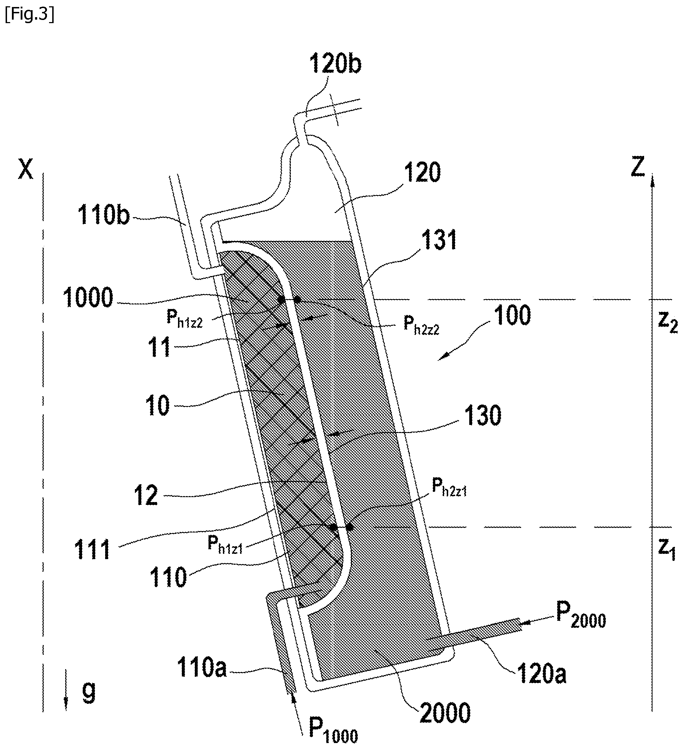

On injecte le fluide d'imprégnation 1000 jusqu'à ce que la chambre d'imprégnation 110 soit entièrement remplie, comme illustré sur la figure 3.

Lorsque la chambre d'imprégnation 110 est totalement remplie par le fluide d'imprégnation 1000, on peut souhaiter augmenter la pression du liquide de compression 2000 sur la membrane 130, pour améliorer le compactage ou conserver une pression de compactage constante.

Par exemple, si le fluide d'imprégnation est une barbotine comprenant des particules, on peut poursuivre l'injection du fluide d'imprégnation 1000 dans la chambre d'imprégnation 110 même lorsque celle-ci est remplie pour assurer une bonne imprégnation de la préforme fibreuse 10. Ainsi, la pression dans la chambre d'imprégnation augmente, et la pression exercée par le fluide d'imprégnation 1000 sur la membrane 130 augmente. Afin de conserver une pression de compactage constante, il est donc nécessaire d'augmenter la pression du liquide de compression 2000 sur la membrane 130.

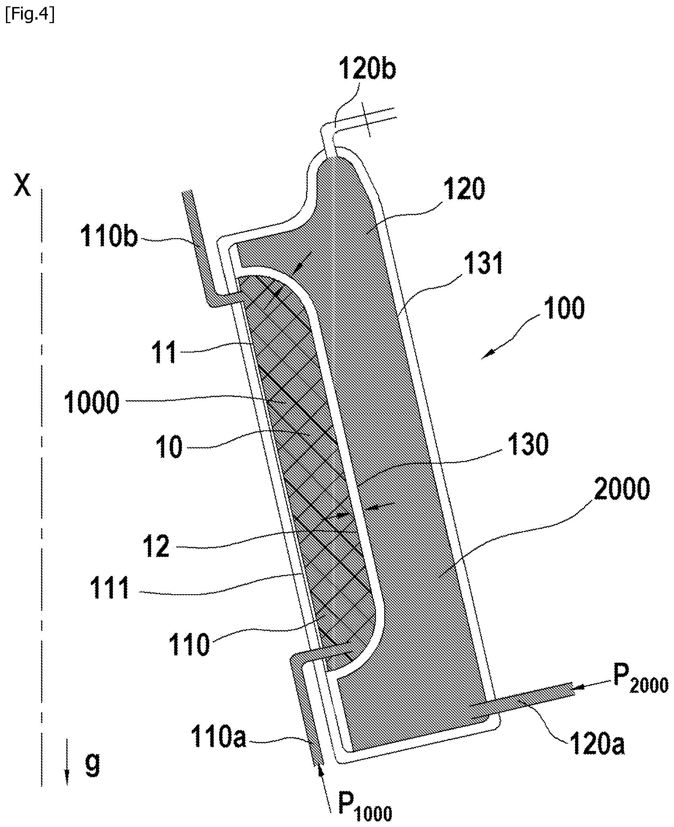

Dans ce premier mode de réalisation de l'invention illustré sur les figures 1 à 4, on augmente la pression exercée par le liquide de compression 2000 sur la membrane 130 en augmentant la hauteur de remplissage du liquide de compression 2000, comme illustré sur la figure 4. Ce premier mode de réalisation est particulièrement intéressant dans le cas où l'on souhaite appliquer une légère compaction sur la préforme fibreuse par pression de la membrane, par exemple lorsque le taux volumique de fibres dans la préforme fibreuse n'est pas satisfaisant. Ainsi, il est par exemple possible d'augmenter le taux volumique de fibres dans la préforme fibreuse avant l'injection. La pression de compactage appliquée par la membrane, c'est-à-dire la différence entre la pression exercée par le fluide d'imprégnation sur la membrane et la pression exercée par le fluide de compression sur la membrane, est inférieure à 0,5 bar. De préférence, cette différence de pression est inférieure à 0,3 bar, voire inférieure à 0,1 bar.

Selon un deuxième mode de réalisation de l'invention, on augmente la pression exercée par le liquide de compression sur la membrane par un dispositif de régulation de pression, ou par un dispositif de maintien de pression différentielle. Par exemple, on peut utiliser un automate de régulation avec asservissement d'une pression par rapport à l'autre. On peut également modifier la hauteur des réservoirs du fluide d'imprégnation et du fluide de compression afin de faire varier la pression exercée sur la membrane.

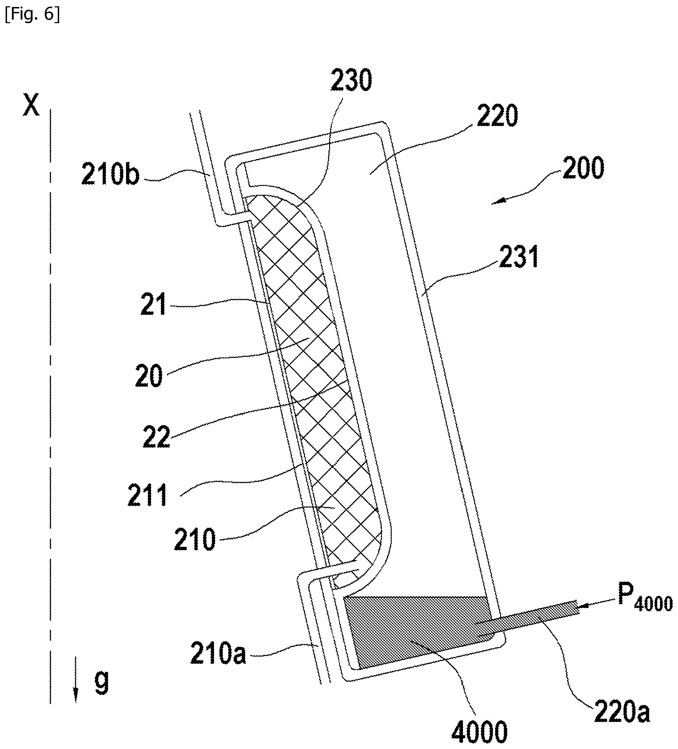

Les figures 6 à 8 décrivent un troisième mode de réalisation de l'invention, dans lequel la pression exercée par la membrane est maîtrisée en remplissant entièrement la chambre de compression et en la fermant. Les figures 6 à 8 illustrent un système de fabrication d'une pièce en matériau composite comprenant un moule 200 qui comporte d'une part une chambre d'imprégnation 210 dans laquelle est disposée une préforme fibreuse 20, et d'autre part une chambre de compaction 220 dans laquelle un liquide de compression 4000 est injecté. Dans ce troisième mode de réalisation de l'invention, le liquide de compression est de préférence très faiblement compressible. Il présente ainsi de préférence une compressibilité isotherme inférieure à 10⁻⁹ Pa⁻¹.

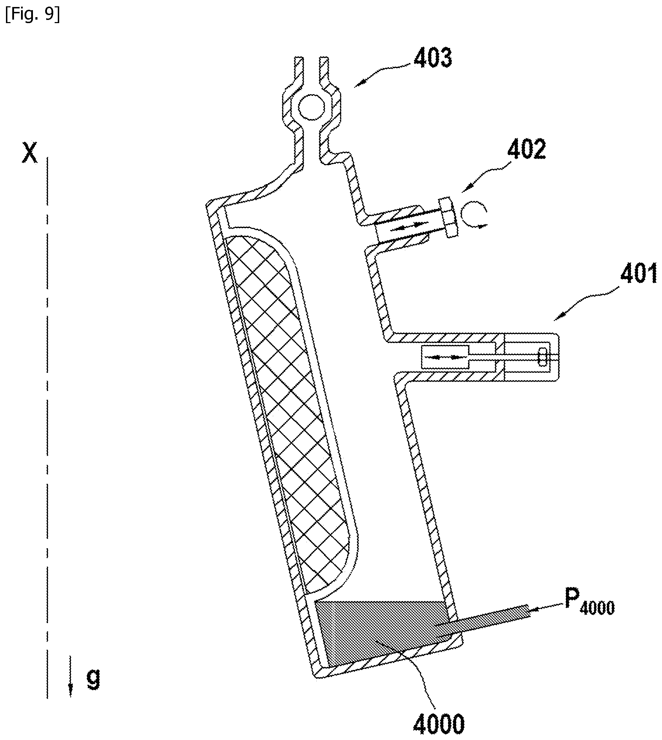

Dans ce troisième mode de réalisation de l'invention, si le liquide de compression n'est pas très faiblement compressible, on peut compenser la perte de volume due à la compression en réduisant progressivement le volume de la chambre de compaction, par exemple par le biais d'un dispositif d'ajustement du volume de la chambre de compaction. Ce dispositif d'ajustement permet de réduire le volume de la chambre de compaction par le biais d'un piston ou d'une vis. La figure 9 illustre un exemple de dispositif 401 d'ajustement du volume de la chambre de compaction par le biais d'un piston et un exemple de dispositif 402 d'ajustement du volume de la chambre de compaction par le biais d'une vis. On ne sort bien entendu pas du cadre de l'invention si le moule possède un seul dispositif d'ajustement du volume de la chambre de compaction ou plus de deux dispositifs d'ajustement du volume de la chambre de compaction. En outre, la figure 9 illustre un exemple d'orifice 403 permettant la purge des gaz.

La chambre d'imprégnation 210 et la chambre de compaction 220 du moule 200 sont séparées par une membrane souple 230. La membrane 230 permet d'appliquer une pression de compactage sur la préforme fibreuse 20 disposée dans la chambre d'imprégnation 210, la pression de compactage restant de préférence assez faible. Cette pression de compactage est produite par le liquide de compression 4000 qui, en appliquant une pression sur la membrane 230, déforme la membrane 230 contre la préforme fibreuse 20 et la maintient en place quand la pression augmente dans la chambre d'imprégnation 210. La membrane 230 peut présenter les mêmes caractéristiques que la membrane 130 décrite précédemment.

La préforme fibreuse 20 peut présenter les mêmes caractéristiques que celles décrites dans le premier mode de réalisation de l'invention, et peut être réalisée selon l'un quelconque des moyens décrits dans ce premier mode. Dans l'exemple illustré sur les figures 6 à 8, la préforme fibreuse 20 est une pièce ouverte ou fermée autour de l'axe X, qui comprend une première face intérieure 21 et une deuxième face extérieure 22.

La chambre d'imprégnation 210 est délimitée par la membrane 230 et par au moins une surface 211 située en regard de la membrane 230. Lorsque la préforme fibreuse 20 est disposée dans la chambre d'imprégnation 210, la première face intérieure 21 de la préforme 20 repose sur la surface 211 de la chambre d'imprégnation 210 et la deuxième face extérieure 22 de la préforme 20 est placée en regard de la membrane 230. Par conséquent, la surface 211 de la chambre d'imprégnation 210 présente une géométrie adaptée à la première face intérieure 21 de la préforme 20.

Le moule 200 comprend au moins un orifice d'entrée 210a du fluide d'imprégnation 3000 et au moins un orifice de sortie 210b du fluide d'imprégnation 3000. De préférence, le ou les orifices d'entrée 210a sont situés à une extrémité de la surface 211 de la chambre d'imprégnation 210 et le ou les orifices de sortie 210b du fluide d'imprégnation 3000 sont situés à l'autre extrémité de la surface 211 de la chambre d'imprégnation 210. De préférence, les orifices d'entrée 210a et les orifices de sortie 210b sont répartis sur la longueur ou la circonférence de la préforme fibreuse 20.

Le système de fabrication comprend en outre un dispositif d'injection du fluide d'imprégnation 3000 configuré pour injecter ledit fluide d'imprégnation 3000 dans la chambre d'imprégnation 210 à une pression p₃₀₀₀.

La chambre de compaction 220 est délimitée par la membrane 230 et par au moins une paroi 231 située en regard de la membrane 230. Dans ce troisième mode de réalisation de l'invention, la ou les parois 231 ne sont pas déformables, en particulier sous l'effet du liquide de compression 4000.

Le moule 200 comprend au moins un orifice d'entrée 220a du liquide de compression 4000. Cet orifice d'entrée 220a du liquide de compression 4000 est susceptible d'être bouché hermétiquement. Le moule 200 peut comprendre au moins un orifice de sortie du liquide de compression 4000.

Le moule 200 comprend, comme dans le mode de réalisation précédent, un ou des orifices (non représenté) pour l'évacuation des gaz pendant le remplissage de la chambre de compaction 220 par le liquide de compression 4000, situés de préférence en haut de ladite chambre de compaction 220 et positionnés selon la géométrie du moule 200.

Le système de fabrication comprend en outre un dispositif d'injection du liquide de compression 4000 configuré pour injecter ledit liquide de compression 4000 dans la chambre de compaction 220 à une pression p₄₀₀₀.

Dans ce troisième mode de réalisation, les caractéristiques du fluide d'imprégnation 3000 peuvent être celles décrites dans le cadre du premier mode de réalisation de l'invention. Dans le cas d'une barbotine comprenant des particules, un filtre (non représenté) peut être disposé dans la chambre d'imprégnation à l'endroit où débouchent le ou les orifices de sortie du fluide d'imprégnation. Ce filtre peut être interposé entre la première face intérieure 21 de la préforme 20 et la surface 211 de la chambre d'imprégnation 210 dans l'exemple illustré sur les figures 6 à 8. Le filtre peut par exemple présenter les mêmes caractéristiques que celles décrites dans le cadre de la figure 5.

Le procédé de fabrication de la pièce en matériau composite selon ce troisième mode de réalisation de l'invention comprend une étape de remplissage de la chambre de compaction 220 illustrée sur la figure 6. Pendant cette étape, on injecte le fluide de compression 4000 dans la chambre de compaction 220 par le ou les orifices d'entrée 220a à une pression d'injection p₄₀₀₀.

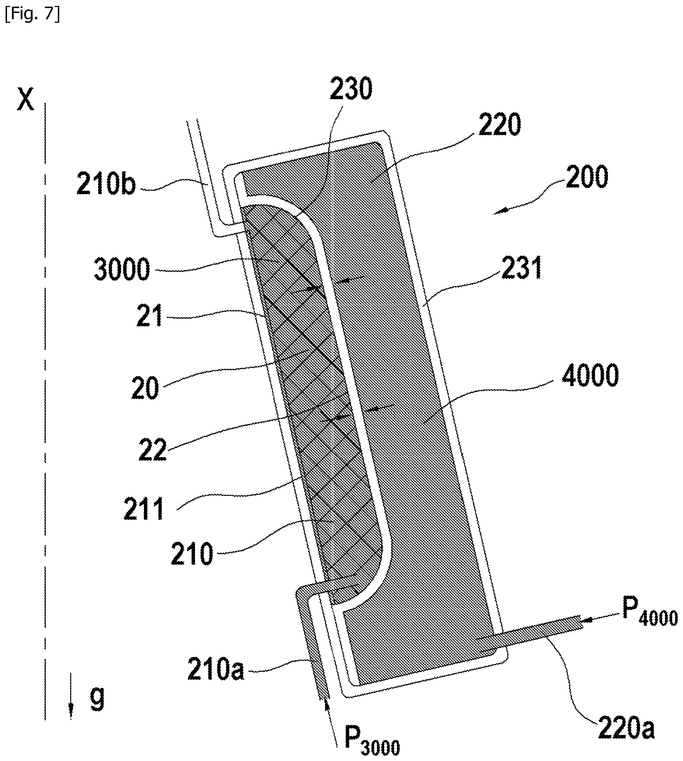

On injecte le fluide d'imprégnation 3000 jusqu'à ce que la chambre d'imprégnation 210 soit entièrement remplie, comme illustré sur la figure 7.

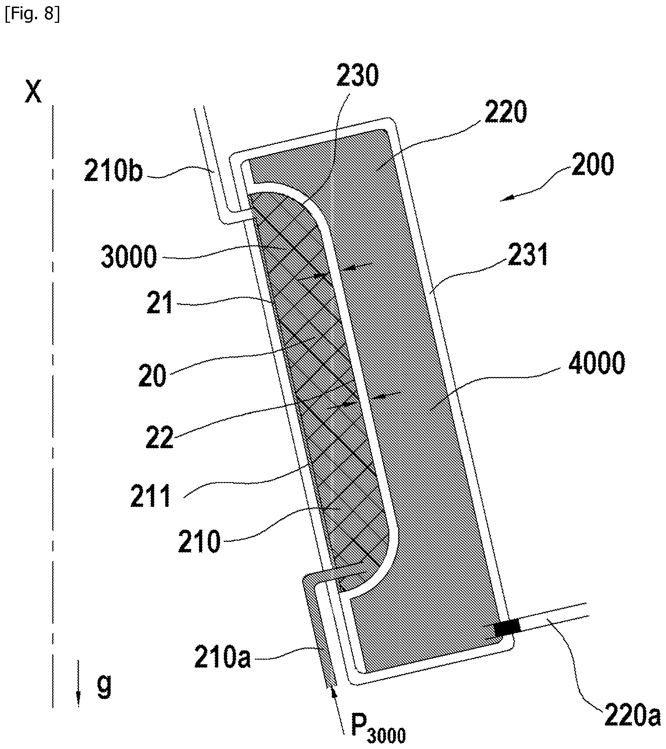

Lorsque la chambre de compaction 220 est totalement remplie, on obture le ou les orifices d'entrée 220a du fluide de compression 4000 en réglant la pression du fluide de compression 4000 à l'intérieur de la chambre de compaction 220, comme illustré sur la figure 8.

Selon un premier exemple de réalisation de ce troisième mode illustré sur les figures 6 à 8, l'injection du fluide d'imprégnation 3000 dans la chambre d'imprégnation 210 est réalisée pendant l'étape de remplissage de la chambre de compaction 220. De préférence, dans cet exemple, l'injection du fluide d'imprégnation 3000 est réalisée de sorte que la différence de hauteur de remplissage dirigée selon la direction de pesanteur g entre le liquide de compression 4000 et le fluide d'imprégnation 3000 mesurée au niveau de la membrane 230 génère une pression différentielle sur la membrane inférieure à 0,5 bar, préférentiellement inférieure à 0,3 bar et préférentiellement inférieure à 0,1 bar.

On peut commencer par remplir uniquement la chambre de compaction 220, avec le liquide de compression 4000, jusqu'à arriver à hauteur de la membrane 230, comme illustré sur la figure 6. Puis, on commence à injecter le fluide d'imprégnation 3000 dans la chambre d'imprégnation 210 tout en poursuivant l'injection du liquide de compression 4000, de sorte à ce que la pression hydrostatique appliquée par le fluide d'imprégnation 3000 sur la membrane 230 soit légèrement inférieure à la pression hydrostatique appliquée par le liquide de compression 4000 sur la membrane 230.

Dans le cas où les masses volumiques ρ₃₀₀₀ et ρ₄₀₀₀ sont quasi-identiques, cela correspond à réaliser l'introduction du fluide d'imprégnation 3000 et l'introduction du liquide de compression 4000 de sorte que les niveaux du fluide d'imprégnation 3000 et du liquide de compression 4000 soient sensiblement identiques de part et d'autre de la membrane 230, comme illustré sur la figure 7.

Lorsque la chambre de compaction 220 est totalement remplie par le liquide de compression 4000, on obture le ou les orifices d'entrées 220a du liquide de compression 4000, comme illustré sur la figure 8.

Selon un deuxième exemple de réalisation de ce troisième mode, l'injection du fluide d'imprégnation 3000 n'est réalisée qu'une fois que la chambre de compaction 220 a été intégralement remplie par le liquide de compression 4000 et que les orifices d'entrées 220a du liquide de compression 4000 ont été obturés, comme illustré sur les figures 6 et 8, figure 7 exclue.

Ainsi, dans ce troisième mode de réalisation de l'invention, lorsque la pression du fluide d'imprégnation 3000 dans la chambre d'imprégnation 210 augmente, la membrane 230 est maintenue en place. En effet, comme le liquide de compression 4000 est quasi incompressible, du fait de sa nature de liquide, et comme les parois 231 de la chambre de compaction 210 sont quasi indéformables, la membrane 230 sera maintenue en place malgré l'augmentation de la pression du fluide d'imprégnation 3000 sur ladite membrane 230. La pression de compactage exercée par la membrane sur la préforme fibreuse 20 sera donc constante malgré l'augmentation de pression dans la chambre d'imprégnation 210. De préférence, le liquide de compression est un liquide le plus incompressible possible, par exemple de l'eau.

Ce troisième mode de réalisation est particulièrement intéressant dans le cas où le taux volumique de fibres dans la préforme fibreuse est déjà satisfaisant et que l'on ne souhaite pas appliquer de compactage supplémentaire à la préforme fibreuse par pression de la membrane. Ainsi, la pression de compactage appliquée par la membrane, c'est-à-dire la différence entre la pression exercée par le fluide d'imprégnation sur la membrane et la pression exercée par le fluide de compression sur la membrane, est inférieure à 0,5 bar. De préférence, cette différence de pression est inférieure à 0,3 bar, voire inférieure à 0,1 bar.

Un compactage supplémentaire peut cependant être réalisé en augmentant la hauteur de remplissage du liquide de compression, par exemple en utilisant une chambre de compaction sensiblement plus haute que la chambre d'imprégnation, ou en utilisant un dispositif de régulation de pression.

Dans chacun des modes de réalisation décrits précédemment, la préforme fibreuse imprégnée par le fluide d'imprégnation est ensuite traitée de manière bien connue de sorte à solidifier le précurseur de matrice dans la porosité de la préforme fibreuse, afin d'obtenir une pièce ayant la forme de la pièce en matériau composite à fabriquer. Le mode de traitement doit être adapté de manière bien connue au type de fluide d'imprégnation utilisé.

## Revendications

1. Procédé de fabrication d'une pièce en matériau composite comprenant les étapes suivantes :
- disposition d'une préforme fibreuse (10, 20) dans un moule (100, 200) comprenant une chambre d'imprégnation (110, 210) étant en contact avec une première face (11, 21) de la préforme (10, 20) sur une surface de support (111, 211) de la chambre d'imprégnation (110, 210), la chambre d'imprégnation (110, 210) étant fermée par une membrane souple (130, 230) placée en regard d'une deuxième face (12, 22) de la préforme (10, 20) opposée à la première face (11, 21), ladite membrane (130, 230) séparant la chambre d'imprégnation (110, 210) d'une chambre de compaction (120, 220),
- injection d'un fluide de compression (2000, 4000) dans la chambre de compaction (120, 220) et injection d'un fluide d'imprégnation (1000, 3000) comprenant un précurseur de matrice dans la chambre d'imprégnation (110, 210),
- traitement de solidification du précurseur de matrice au sein de la préforme fibreuse (10, 20) de sorte à obtenir une pièce en matériau composite comprenant un renfort fibreux lié par une matrice solide,
le procédé étant **caractérisé en ce que** le fluide de compression (2000, 4000) est un liquide dont la valeur de la masse volumique correspond à entre 60% et 125% de la valeur de la masse volumique du fluide d'imprégnation (1000, 3000).

2. Procédé de fabrication selon la revendication 1, dans lequel la préforme fibreuse (10, 20) disposée dans le moule (100, 200) s'étend sur une hauteur supérieure ou égale à 300 mm selon la direction de l'accélération de pesanteur (g).

3. Procédé de fabrication selon la revendication 1 ou 2, dans lequel la différence entre la pression exercée par le fluide d'imprégnation (1000, 3000) sur la membrane (130, 230) et la pression exercée par le fluide de compression (2000, 4000) sur la membrane (130, 230) est inférieure à 0,5 bar.

4. Procédé de fabrication selon l'une quelconque des revendications 1 à 3, dans lequel le fluide de compression (2000, 4000) et le fluide d'imprégnation (1000, 3000) ont la même composition.

5. Procédé de fabrication selon l'une quelconque des revendications 1 à 4, dans lequel le fluide d'imprégnation (1000) est une suspension comprenant une pluralité de particules de précurseur de matrice, la surface de support (311) de la chambre d'imprégnation (310) du moule (300) comprenant un filtre (340) configuré pour retenir les particules de la suspension dans la chambre d'imprégnation (310).

6. Procédé de fabrication selon l'une quelconque des revendications 1 à 5, dans lequel au moins une partie du fluide de compression (2000, 4000) introduit dans la chambre de compaction (120, 220) est ensuite introduite dans la chambre d'imprégnation (110, 210).

7. Procédé de fabrication selon la revendication 6, dans lequel l'introduction d'une partie du fluide de compression (2000, 4000) dans la chambre d'imprégnation (110, 210) est réalisée par un réseau en série reliant la chambre de compaction (120, 220) et la chambre d'imprégnation (110, 210), ledit réseau comprenant un dispositif permanent de contrôle de pression.

8. Procédé de fabrication selon l'une quelconque des revendications 1 à 7, dans lequel l'injection du fluide de compression (2000, 4000) est réalisée au moins en partie pendant le remplissage de la chambre d'imprégnation (110, 210) par le fluide d'imprégnation (1000, 3000) de sorte que la différence de hauteur de remplissage entre le fluide de compression (2000, 4000) et le fluide d'imprégnation (1000, 3000) mesurée au niveau de la membrane (130, 230) selon la direction de l'accélération de pesanteur (g) soit positive ou nulle, et inférieure à 500 mm et de sorte que la différence de pression entre le fluide de compression (2000, 4000) et le fluide d'imprégnation (1000, 3000) de part et d'autre de la membrane (130, 230) soit inférieure à 0,3 bar.

9. Procédé de fabrication selon l'une quelconque des revendications 1 à 8, dans lequel on augmente la pression exercée sur la membrane (130, 230) par le fluide de compression (2000, 4000) après le remplissage de la chambre d'imprégnation (110, 210).

10. Procédé de fabrication selon la revendication 9, dans lequel l'augmentation de la pression exercée sur la membrane (130) par le fluide de compression (2000) est réalisée en augmentant la hauteur de remplissage du fluide de compression (2000).

11. Procédé de fabrication selon la revendication 9 ou 10, dans lequel le fluide de compression (4000) présente une compressibilité isotherme inférieure à 10⁻⁹ Pa⁻¹ et les parois de la chambre de compaction (231) sont indéformables à l'exception de la membrane (230), l'augmentation de la pression exercée sur la membrane (230) par le fluide de compression (4000) étant réalisée en fermant la chambre de compaction (220) de sorte qu'elle soit remplie par le fluide de compression (4000).

12. Procédé de fabrication selon l'une quelconque des revendications 1 à 7, dans lequel le fluide de compression (4000) présente une compressibilité isotherme inférieure à 10⁻⁹ Pa⁻¹ et les parois (231) de la chambre de compaction (220) sont indéformables à l'exception de la membrane (230), et dans lequel le fluide d'imprégnation (3000) est injecté dans la chambre d'imprégnation (210) une fois que la chambre de compaction (220) est remplie par le fluide de compression (4000) et fermée.

13. Procédé de fabrication selon l'une quelconque des revendications 1 à 9, dans lequel le moule comprend un dispositif (401, 402) d'ajustement du volume de la chambre de compaction comportant au moins un élément mobile.

## Patentansprüche

1. Herstellungsverfahren eines Teils aus Verbundwerkstoff, umfassend die folgenden Schritte:
- Anordnen eines fasrigen Vorformlings (10, 20) in einer Form (100, 200), umfassend eine Imprägnierkammer (110, 210), die auf einer Trägerfläche (111, 211) der Imprägnierkammer (110, 210) mit einer ersten Seite (11, 21) des Vorformlings (10, 20) in Kontakt ist, wobei die Imprägnierkammer (110, 210) durch eine flexible Membran (130, 230) verschlossen ist, die gegenüber einer zweiten Seite (12, 22) des Vorformlings (10, 20) gegenüber der ersten Seite (11, 21) platziert ist, die Membran (130, 230) die Imprägnierkammer (110, 210) von einer Verdichtungskammer (120, 220) trennt,
- Einspritzen eines Kompressionsfluids (2000, 4000) in die Verdichtungskammer (120, 220) und Einspritzen eines Imprägnierfluids (1000, 3000), umfassend einen Matrixvorläufer, in die Imprägnierkammer (110, 210),
- Verfestigungsbehandlung des Matrixvorläufers innerhalb des fasrigen Vorformlings (10, 20), sodass ein Teil aus Verbundmaterial erlangt wird, umfassend eine Faserverstärkung, die durch eine feste Matrix gebunden ist,
- wobei das Verfahren **dadurch gekennzeichnet ist, dass** das Kompressionsfluid (2000, 4000) eine Flüssigkeit ist, deren Dichtewert zwischen 60 % und 125 % des Dichtewerts des Imprägnierfluids (1000, 3000) entspricht.

2. Herstellungsverfahren nach Anspruch 1, wobei sich der in der Form (100, 200) angeordnete Faservorformling (10, 20) über eine Höhe von 300 mm oder mehr entlang der Richtung der Erdbeschleunigung (g) erstreckt.

3. Herstellungsverfahren nach Anspruch 1 oder 2, wobei die Differenz zwischen dem Druck, der von dem Imprägnierfluid (1000, 3000) auf die Membran (130, 230) ausgeübt wird, und dem Druck, der von dem Kompressionsfluid (2000, 4000) auf die Membran (130, 230) ausgeübt wird, weniger als 0,5 bar ist.

4. Herstellungsverfahren nach einem der Ansprüche 1 bis 3, wobei das Kompressionsfluid (2000, 4000) und das Imprägnierfluid (1000, 3000) die gleiche Zusammensetzung aufweisen.

5. Herstellungsverfahren nach einem der Ansprüche 1 bis 4, wobei das Imprägnierfluid (1000) eine Suspension ist, umfassend eine Vielzahl von Matrixvorläuferpartikeln, die Trägerfläche (311) der Imprägnierkammer (310) der Form (300) umfassend einen Filter (340), der konfiguriert ist, um die Partikel der Suspension in der Imprägnierkammer (310) zurückzuhalten.

6. Herstellungsverfahren nach einem der Ansprüche 1 bis 5, wobei mindestens ein Teil des in die Verdichtungskammer (120, 220) eingeleiteten Kompressionsfluids (2000, 4000) dann in die Imprägnierkammer (110, 210) eingeleitet wird.

7. Herstellungsverfahren nach Anspruch 6, wobei das Einleiten eines Teils des Kompressionsfluids (2000, 4000) in die Imprägnierkammer (110, 210) durch ein Netz in Reihe erfolgt, das die Verdichtungskammer (120, 220) und die Imprägnierkammer (110, 210) verbindet, das Netzwerk umfassend eine permanente Drucksteuerungsvorrichtung.

8. Herstellungsverfahren nach einem der Ansprüche 1 bis 7, wobei das Einspritzen des Kompressionsfluids (2000, 4000) zumindest teilweise während des Füllens der Imprägnierkammer (110, 210) mit dem Imprägnierfluid (1000, 3000) durchgeführt wird sodass die Differenz der Füllhöhe zwischen dem Kompressionsfluid (2000, 4000) und dem Imprägnierfluid (1000, 3000), gemessen auf Ebene der Membran (130, 230) in Richtung der Erdbeschleunigung (g), positiv oder null und kleiner als 500 mm ist, und sodass die Druckdifferenz zwischen dem Kompressionsfluid (2000, 4000) und dem Imprägnierfluid (1000, 3000) auf beiden Seiten der Membran (130, 230) kleiner als 0,3 bar ist.

9. Herstellungsverfahren nach einem der Ansprüche 1 bis 8, wobei der Druck, der durch das Kompressionsfluid (2000, 4000) auf die Membran (130, 230) ausgeübt wird, nach dem Füllen der Imprägnierkammer (110, 210) erhöht wird.

10. Herstellungsverfahren nach Anspruch 9, wobei die Erhöhung des Drucks, der durch das Kompressionsfluid (2000) auf die Membran (130) ausgeübt wird, durch Erhöhen der Füllhöhe des Kompressionsfluids (2000) durchgeführt wird.

11. Herstellungsverfahren nach Anspruch 9 oder 10, wobei das Kompressionsfluid (4000) eine isotherme Kompressibilität von weniger als 10⁻⁹ Pa⁻¹ aufweist und die Wände der Verdichtungskammer (231) mit Ausnahme der Membran (230) unverformbar sind, die Erhöhung des Drucks, der durch das Kompressionsfluid (4000) auf die Membran (230) ausgeübt wird, dadurch erreicht wird, dass die Verdichtungskammer (220) geschlossen wird, sodass sie mit dem Kompressionsfluid (4000) gefüllt wird.

12. Herstellungsverfahren nach einem der Ansprüche 1 bis 7, wobei das Kompressionsfluid (4000) eine isotherme Kompressibilität von weniger als 10⁻⁹ Pa⁻¹ aufweist und die Wände (231) der Verdichtungskammer (220) mit Ausnahme der Membran (230) unverformbar sind, und wobei das Imprägnierfluid (3000) in die Imprägnierkammer (210) eingespritzt wird, nachdem die Verdichtungskammer (220) mit dem Kompressionsfluid (4000) gefüllt und geschlossen ist.

13. Herstellungsverfahren nach einem der Ansprüche 1 bis 9, wobei die Form eine Vorrichtung (401, 402) zum Einstellen des Volumens der Verdichtungskammer umfasst, umfassend mindestens ein bewegliches Element.

## Claims

1. A method for manufacturing a part made of composite material comprising the following steps:
- arrangement of a fibrous preform (10, 20) in a mold (100, 200) comprising an impregnation chamber (110, 210) being in contact with a first face (11, 21) of the preform (10, 20) on a support surface (111, 211) of the impregnation chamber (110, 210), the impregnation chamber (110, 210) being closed by a flexible membrane (130, 230) placed facing a second face (12, 22) of the preform (10, 20) opposite the first face (11, 21), said membrane (130, 230) separating the impregnation chamber (110, 210) from a compaction chamber (120, 220),
- injection of a compression fluid (2000, 4000) into the compaction chamber (120, 220) and injection of an impregnation fluid (1000, 3000) comprising a matrix precursor into the impregnation chamber (110, 210),
- solidification treatment of the matrix precursor within the fibrous preform (10, 20) so as to obtain a part made of composite material comprising a fibrous reinforcement bound by a solid matrix,
the method being **characterized in that** the compression fluid (2000, 4000) is a liquid in which the value of the density corresponds to between 60% and 125% of the value of the density the impregnation fluid (1000, 3000).

2. The manufacturing method according to claim 1, wherein the fibrous preform (10, 20) disposed in the mold (100, 200) extends over a height greater than or equal to 300 mm in the direction of the acceleration of gravity (g).

3. The manufacturing method according to claim 1 or 2, wherein the difference between the pressure exerted by the impregnation fluid (1000, 3000) on the membrane (130, 230) and the pressure exerted by the compression fluid (2000, 4000) on the membrane (130, 230) is less than 0.5 bar.

4. The manufacturing method according to any one of claims 1 to 3, wherein the compression fluid (2000, 4000) and the impregnation fluid (1000, 3000) have the same composition.

5. The manufacturing method according to any one of claims 1 to 4, wherein the impregnation fluid (1000) is a suspension comprising a plurality of matrix precursor particles, the support surface (311) of the impregnation chamber (310) of the mold (300) comprising a filter (340) configured to retain the particles of the suspension in the impregnation chamber (310).

6. The manufacturing method according to any one of claims 1 to 5, wherein at least a portion of the compression fluid (2000, 4000) introduced into the compaction chamber (120, 220) is then introduced into the impregnation chamber (110, 210).

7. The manufacturing method according to claim 6, wherein the introduction of a portion of the compression fluid (2000, 4000) into the impregnation chamber (110, 210) is carried out by a series network connecting the compaction chamber (120, 220) and the impregnation chamber (110, 210), said network comprising a permanent pressure control device.

8. The manufacturing method according to any one of claims 1 to 7, wherein the injection of the compression fluid (2000, 4000) is carried out at least in part during the filling of the impregnation chamber (110, 210) with the impregnation fluid (1000, 3000) so that the difference in filling height between the compression fluid (2000, 4000) and the impregnation fluid (1000, 3000) measured at the membrane (130, 230) according to the direction of the acceleration of gravity (g) is positive or zero, and less than 500 mm and so that the pressure difference between the compression fluid (2000, 4000) and the impregnation fluid (1000, 3000) on either side of the membrane (130, 230) is less than 0.3 bar.

9. The manufacturing method according to any one of claims 1 to 8, wherein the pressure exerted on the membrane (130, 230) by the compression fluid (2000, 4000) is increased after filling the impregnation chamber (110, 210).

10. The manufacturing method according to claim 9, wherein the increase in the pressure exerted on the membrane (130) by the compression fluid (2000) is achieved by increasing the filling height of the compression fluid (2000).

11. The manufacturing method according to claim 9 or 10, wherein the compression fluid (4000) has an isothermal compressibility of less than 10⁻⁹ Pa⁻¹ and the walls of the compaction chamber (231) are non-deformable with the exception of the membrane (230), the increase in the pressure exerted on the membrane (230) by the compression fluid (4000) being carried out by closing the compaction chamber (220) so that it is filled by the compression fluid (4000).

12. The manufacturing method according to any one of claims 1 to 7, wherein the compression fluid (4000) has an isothermal compressibility of less than 10⁻⁹ Pa⁻¹ and the walls (231) of the compaction chamber (220) are non-deformable with the exception of the membrane (230), and wherein the impregnation fluid (3000) is injected into the impregnation chamber (210) once the compaction chamber (220) is filled with the compression fluid (4000) and closed.

13. The manufacturing method according to any one of claims 1 to 9, wherein the mold comprises a device (401, 402) for adjusting the volume of the compaction chamber including at least one moving element.
